# EUROPEAN PATENT APPLICATION

(11) **EP 2 863 177 A1**
(43) Date of publication of application: **22.04.2015**
(21) Application number: 13189271.3
(22) Date of filing: 18.10.2013
(51) Int. Cl.: G01C 21/20, G01C 21/34, G05D 1/02

(54) **Method of calculation a path for use in a vehicle**

(71) Applicant: AEVO GmbH, 80992 München (DE)
(72) Inventor: Graciano, Joao Paulo Parreira Lourinho, 80805 München (DE)
(74) Representative: Maiwald Patentanwalts GmbH

(57) **Abstract**

A method for calculating a path for use in a vehicle is presented. The presented method enables the vehicle to calculate its own complete global route in real-time based on determined extremes of obstacles, or extremes of geometric representations of obstacles, which surround the vehicle. The presented method can be carried out without requiring significant computational resources such that it can be used particularly in autonomous vehicles. In particular, the vehicle carrying out the presented method can calculate a collision-free trajectory for the movement of the vehicle in real-time.

## Description

### FIELD OF THE INVENTION

The present invention relates to path calculation. In particular, the present invention relates to a method of calculating a path for use in a vehicle, a vehicle for calculating a path, a program element and a computer-readable medium.

### BACKGROUND OF THE INVENTION

Path planning is a capability essential for any navigation system. For applications involving autonomous vehicles, the path planning is especially critical, as it must allow the vehicle to autonomously decide its own trajectory in real-time and in safety. This includes situations of obstacle avoidance, where the vehicle must maneuver to avoid an obstacle, or where the behavior of the vehicle is degraded for some reason, such that the path planning function needs to take this into account. The great majority of known path planning methods are based around the concept of searching incrementally for the path along a given network.

Moreover, know navigation methods typically enable vehicles to follow a predefined route. Some of them also provide obstacle avoidance in real time, but only at the local level. To increase the autonomy of vehicles in order to realistically use them, there is the need for path planning methods that enable vehicles to calculate their complete global route in real-time. To determine a global path in any general map or terrain typically requires significant computational resources, which are impractical in autonomous vehicles as they have limited energy, space and consequently computational capability. Because of this, vehicles typically require significant time to calculate a global trajectory. Current path planning algorithms are thus unable to provide reliable real-time global path planning.

### SUMMARY OF THE INVENTION

The object of the present invention may be seen in providing for an improved calculation of a path for use in a vehicle.

The object of the present invention is solved by the subject-matter of the independent claims. Further embodiments and advantages of the invention are incorporated in the dependent claims.

The exemplary embodiments described in the following similarly pertain to the method of calculating a path for use in a vehicle, the vehicle configured for calculating a path, a program element for calculating a path and the computer-readable medium. Synergetic effects may arise from different combinations of the embodiments, although they might not be described in detail hereinafter. Certainly, the skilled person derives from the following detailed facts regarding the method, that the respectively described aspects are similarly applicable to the vehicle, the program element and the computer-readable medium, respectively, and vice versa.

Further on, it shall be noted that all embodiments of the present invention concerning a method, might be carried out with the order of the steps as described, nevertheless this has not to be the only and essential order of the steps of the method. The skilled person gathers all kinds of different orders and combinations of the method steps described herein, unless explicitly mentioned to the contrary hereinafter.

Moreover, in the context of the present invention the term "*autonomous vehicle*" shall include but is not limited to cars, trucks, motorbikes, ground vehicles, flight vehicles, lighter-than-air vehicles, underwater vehicles, and space vehicles, robots and automated machines with moving parts, independently of the particular use or application. Also unmanned and manned vehicles are included. The vehicle as understood in the context of the present invention may also be any means of transport.

According to an exemplary embodiment of the invention, a method of calculating a path for use in a vehicle is presented. The method comprises the step of receiving map data comprising a current status of the vehicle comprising at least a current position of the vehicle, at least a first geometric representation of a first obstacle, and a target position. This step may be termed S1 in the following. Moreover, determining at least a first point which corresponds to a first extreme of the first geometric representation is comprised by the method, wherein the first extreme is visible from the vehicle position. This step may be termed S2 in the following. Identifying a first connecting element, e.g. a first line, starting at the first point and ending at a border of the map or at a border of a geometric representation of an another obstacle is another step of this embodiment of the invention. This step may be termed S3 in the following. Also, the step of defining at least a first cross point located on the first connecting element and determining whether the target position is visible from the first cross point is carried out by this method. These steps may be termed S4 and S5 in the following. Further, identifying a sequence of waypoints as a first path for the vehicle from the position of the vehicle to the position of the target in case the target position is visible from the first cross point, wherein the sequence of waypoints comprising the first cross point is comprised by the presented method. This step may be termed S6 in the following.

In the context of the present application, connecting elements may also be denoted as "lines". Of course, the skilled person can also use other geometric representations as connecting elements. For example, the connecting element may be a polygon or an area.

Moreover, the current position of the vehicle will be used in the following as an exemplary embodiment of the status of the vehicle in order to describe different aspects of the present invention. However, also other embodiments of the feature status of the vehicle could be used in the same way, also in combination. For example, the current status of the vehicle may be selected from the group comprising a velocity of the vehicle, an acceleration of the vehicle, an orientation of the vehicle, a vertical position of the vehicle, and any combination thereof.

Based on this method an extreme-based, self-sustained and autonomous calculation of the path for the vehicle is presented, even during situations where surrounding obstacles of the vehicle are moving, such that a vehicle is enabled to autonomously calculate the optimal or a preferred path to the target. More details and explanations will be given in the following.

In other words, the presented method enables the vehicle to calculate its own complete global route in real-time based on determined extremes of obstacles, or extremes of geometric representations of obstacles, which surround the vehicle. The presented method can be carried out without requiring significant computational resources such that it can be used particularly in autonomous vehicles. The presented method may thus be used for facilitating that the vehicle becomes really autonomous. In particular, the vehicle carrying out the presented method can calculate a collision-free trajectory for the movement of the vehicle in real-time. Moreover, the presented method allows for a calculation of a global path and not just only for a section of the trajectory.

The present invention can be used to provide the necessary reliability to autonomous vehicles. In detail, in order to make vehicles really autonomous, they should be able to calculate a collision-free trajectory in real time. The present invention facilitates such a real time calculation, as will be explained in detail hereinafter. Furthermore, often the calculation should be of the global path and not just a section of the trajectory. The present invention also facilitates such a global path calculation. Further, the present invention can take into account that a small change, for example a change in a position of an obstacle, along the path might completely change the global path. The present invention removes this difficulty and enables mobile vehicles to calculate global routes in real time by themselves. This will be elucidated hereinafter in the context of several different embodiments of the present invention.

Inter alia, the present invention teaches to select a first point or a first node of a first extreme, further identifies a first connecting element which constitutes a first gate, wherein it is evaluated by the method whether it is appropriate for the vehicle to pass said gate. Details about the extreme-based identification and/or creation of said gates and the evaluation whether it is valuable, i.e. desired and/or appropriate, for the vehicle to select a path through that gate will be explained in more detail hereinafter. Different evaluations to determine whether a movement of the vehicle through said gate is feasible and/or valuable can be used, for example by different cost functions. This will be defined further in the context of exemplary embodiments.

If desired, the step of receiving map data may be embodied as providing a map which comprises the current status of the vehicle, the first geometric representation of the first obstacle and the target position. However, not a complete map must necessarily be provided but only partial data thereof. This data may be used by the method of the present invention. For example, said data may be extracted from a given map or a map stored in the vehicle or at a remote location. Network access may be used to retrieve the map data from such a location. The map data may be provided to a calculation unit, for example a calculation unit of the vehicle. Further details and explanations thereof will be provided in the following. Further, the received map data may also comprise a position, like e.g. coordinates, for example GPS coordinates, of the first obstacle or a position of the geometric representation of the first obstacle.

Further, the first obstacle and/ or any other obstacle and/or the geometric representation of such an obstacle may also have a velocity which can be taken into account in the method of the present invention. Such a velocity of an obstacle can be comprised by the map data. In other words, a velocity vector may be associated to the first obstacle and/or the geometric representation of the first obstacle. The velocity of the first obstacle and/or of the representation of the first obstacle can also be used for the determination of, for example, the first point corresponding to the first extreme, identifying the first connecting element, and/or defining the first cross point. The velocity of the first obstacle and/or the geometric representation of the first obstacle may also be taken into account in other method steps described herein and also for other obstacles and/or geometric representations of obstacles. For example, for determining the first cross point a future position of the first obstacle, to which the first obstacle will have moved when the vehicle will have reached the first cross point, may be used.

It shall be noted, that in the context of the present invention, the target does not need to represent a final target in the mission, but can also represent an intermediate point of the mission. Moreover, the map can have any number of dimensions. For example, if time is added as an extra dimension to the usually used three-dimensional space, the map used by the present invention may have four dimensions. The map may also have 2 spatial dimension and one time dimension. Moreover, the dimensionality of the objects in the map can vary from one dimension, i.e. a point, up to the dimension of the map. Therefore, in general, the number and shape of vehicles, obstacles, targets and any other regions is not limited.

If desired, the step of identifying a sequence of waypoints, in this and every other exemplary embodiment of the present invention, may comprise the step of storing the sequence of waypoints, i.e. of the coordinates of the respective waypoints, for example on a storage medium within a vehicle or also at a remote location. Also a storage of the first cross point, i.e. of the coordinates of the first cross point, and the storage of further cross points is, of course, possible. Such a storage may be used for further calculations, as will be explained with respect to different embodiments hereinafter.

It should be noted that the presented method does not have to stop when the target position is visible from one identified cross point. Thus, the method may also be repeated or another iteration can be carried out although the target position is already visible. This may be desirable, for example, when a path with a particular characteristics, e.g. a low number of curves, is desired.

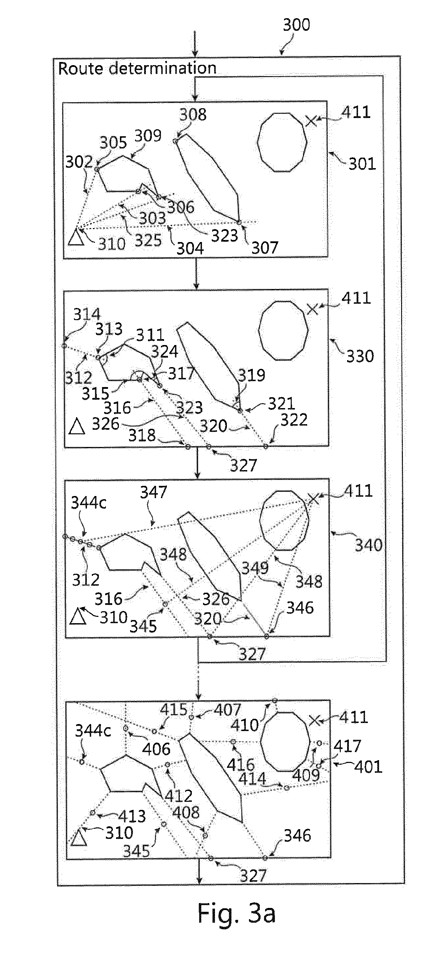

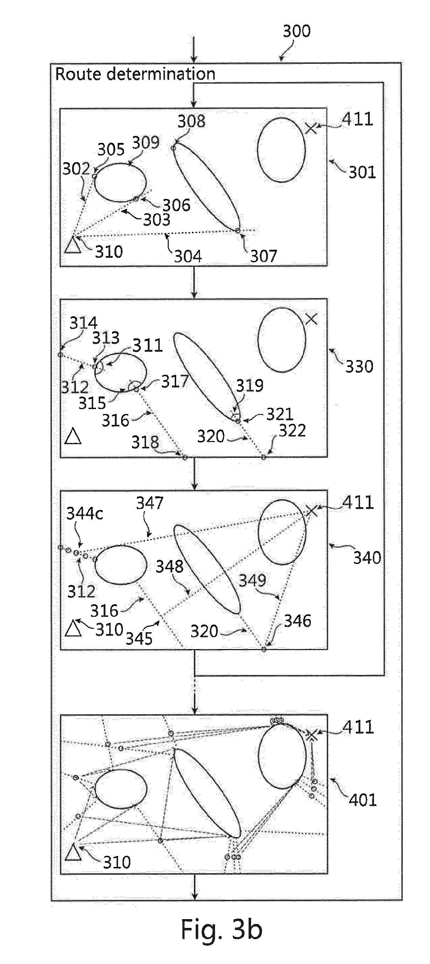

The step of determining at least a first point may be seen as determining from the perspective of the current position of the vehicle at least a first point which corresponds to a visible extreme of the first geometric representation. This can be gathered, for example, from Figs. 3a and 3b and the corresponding description.

Moreover, in the context of the present invention, the term "*visible from the first cross point*" shall be understood as visible from the perspective of the first cross point, in view of the first cross point, or in the line of sight of the first cross point without any obstacles. Of course, the previous explanation holds true for other points like e.g. the second or third cross point if additional iterations of the presented method are carried out.

Moreover, in the context of the present invention, the term "*extreme of a geometric representation*" may be seen as an outer border of the geometric representation. For example, the geometric representation may be embodied as a polygon, such that a corner of the polygon is an embodiment of such an extreme. However, the geometric representations used may also be circles and/or ellipses, such that extremes thereof may be embodied as a point on said circle and/or on said ellipse which defines the breadth of the corresponding geometric representation in view of the first cross point. In addition, details thereof will be explained hereinafter in more detail, particularly with respect to partial Figs. 340 of Figs. 3a and 3b.

In addition, the term "*adjacent obstacle*" may be seen as an adjacent representation of an obstacle which is located adjacently from or to a respective obstacle of interest. However, even if the adjacent object would, in some exemplary cases, mean 'nearby', this also allows that the adjacent object could be 10000 km apart. Also in such cases the method presented herein is applicable.

If desired, the received map data or the provided map may also comprise a plurality of geometric representations of a respective obstacle. In this respect, each representation represents a respective obstacle. It should be noted that in the context of the present invention, an obstacle may be an object of the real world and may thus be seen as a real obstacle. However, also virtual obstacles shall be included. Virtual obstacles may refer to regions which the vehicle should avoid. For example, these regions may be determined as complementary regions of a flight corridor within which the vehicle should move. Virtual obstacles may, e.g., also refer to regions in space which are considered dangerous and should be avoided by a flying vehicle. For example, these virtual obstacles may be regions around a radar position, which the vehicle should avoid in order to avoid detection by the radar.

As described above, the received or provided map data comprises the target position and the vehicle position. However, if desired, the target position and/or the vehicle position may not be depicted or shown during the calculation of the path for the vehicle but they may be known to the system which carries out the presented method.

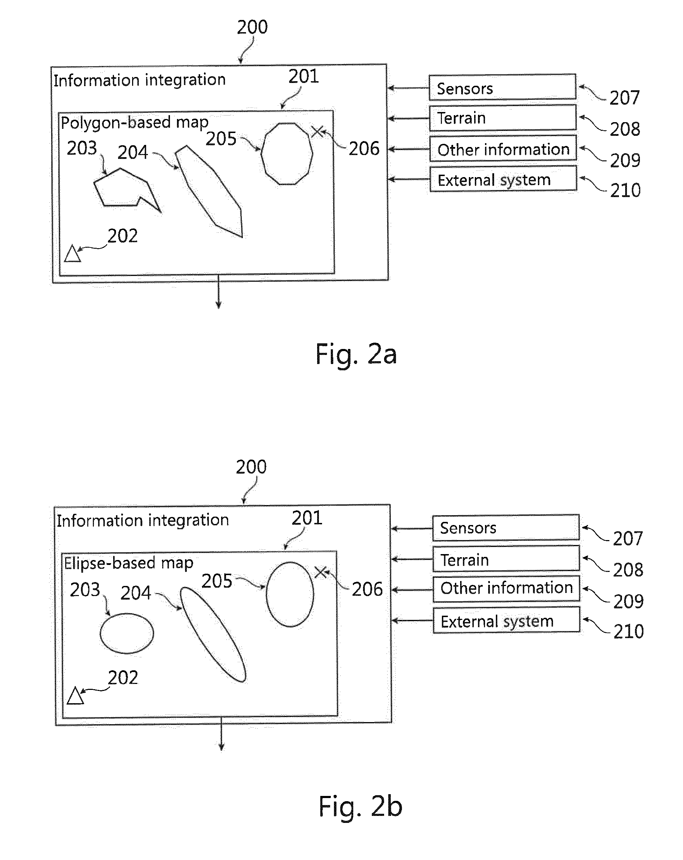

In general, it is not necessary to provide any visual representation of the method which is carried out according to the present invention, although in Figs. 2a to 3b exemplary graphical illustrations are presented for explaining the working principle of the present invention. Of course, the skilled person is also provided with the possibility by the present invention to simultaneously provide graphical representation of the calculation method as exemplarily shown by said Figs. 2a to 3b. Thus, a graphical representation corresponding to the currently performed calculation is an optional feature, which the user may select or may not select.

Regarding the step of identifying a first connecting element, it shall be noted that said first connecting element may be calculated without drawing or illustrating it on a screen shown to the user. Thus, the step of identifying the first connecting element may be understood as calculating and/or creating the first connecting element. The same holds true for subsequently indentified connecting elements, like e.g. second, third and fourth connecting elements.

It will thus be understood by the skilled person that the current status of the vehicle comprising at least the current position, the used geometric representations of the obstacles and the target position may be seen as mathematical representations of the respective geographical positions. If desired, said positions and/or representations may be provided as visual indications of the corresponding coordinates within the map and/or as provided data.

Therein, the map data and the corresponding map may be two-dimensional (2D) or three-dimensional (3D) wherein in case of three dimensions, a given height of the vehicle can be provided or assumed. For example, for a car or a motorbike, an approximate height between half a meter and two meters may be used for the herein presented method. However, also other values can be used.

According to another exemplary embodiment of the invention, the map data comprises a second geometric representation of a second obstacle. Furthermore, the method comprises the steps of repeating the previously described steps S2 to S6 starting with the first cross point. Therein, the repeated step S2 is carried out such that the first cross point is used instead of the current status of the vehicle comprising at least the current position of the vehicle. Moreover, in the repeated step S2, at least a second point which corresponds to a first extreme of the second geometric representation is determined such that the second point is visible from the first cross point. This process of calculation for a further, e.g. a second, obstacle is exemplarily depicted, inter alia, in the Figs. 3 a and 3b.

In other words, this embodiment may be applied in case after the first evaluation, i.e. after the previously described method has been carried out, the target position is not yet visible from the first cross point. Such a situation can be depicted from Fig. 3a, see e.g. representation 340/partial Fig. 340, in which the target position is not visible from the first cross point 344c of gate 312 or from other, additional cross points which have been defined so far on gate 312, or also from other gates. Also Fig. 3b shows such a situation in representation 340/partial Fig. 340. More details will be explained hereinafter in the context of the respective figure description. Consequently, the steps additionally provided by this exemplary embodiment may be seen as subsequent steps which are carried out subsequent to steps S1 to S6. Therefore, the method of this exemplary embodiment may be seen as stepwise calculation of the path for use in the vehicle depending on the fact whether the target position is already visible from at least one cross point that has been defined so far or from cross points that have been defined so far. Thus, the presented method may also be seen as an iterative method which iteratively calculates based on at least a first cross point or a plurality of cross points, until the target position is visible from the perspective of at least one cross point. More aspects about the iterative character of the herein presented embodiment of the method will be elucidated with the description of the figures.

Within this application, the first geometric representation of the first obstacle and the second geometric representation of the second obstacle may refer to different geometric representations of different obstacles. The first geometric representation of the first obstacle and the second geometric representation of the second obstacle may also refer to the same representation of the same obstacle. For example, such a situation is depicted in Fig. 3a, 401. When applying steps S2 to S6 starting from cross point 344c the next cross point could be point 406, which is determined by applying the described steps using the same geometric representation of the obstacle 309 as before.

In addition the following should be noted. If desired, said additional steps may also be carried out, if the target position is already visible from the first cross point, or in general from a previously determined cross point or from previously determined cross points. This may be useful for comparisons or for statistical purposes.

According to another exemplary embodiment of the present invention, the received map data comprise a plurality of geometric representations, wherein each geometric representation represents a respective obstacle. Moreover, the steps S2 to S6 can be repeated until the target position is visible from at least one final cross point.

It should be noted that in parallel a second, a third and even more calculations with respectively different starting points may be carried out. It might be appropriate that each individual calculation is carried out until at least one final cross point, from the target position is visible, can be determined. However, if desired, a parallel calculation, for example the second calculation, may be stopped or terminated in case another parallel calculation, starting from another cross point, has already identified a final cross point from which the target position is visible. Whether the method is carried out to the end for all possible, parallel calculations may be set, i.e. selected, by the user in a previous setting. Such a parallel calculation can be exemplarily gathered from representations 330, 340 and 401 of Figs. 3a and 3b and the corresponding description.

According to yet another exemplary embodiment of the present invention, each repetition of the steps S2 to S6 defines an iteration, wherein the final cross point is the cross point defined in the last iteration. In an example the sequence of waypoints comprises the cross points of all iterations.

As can be gathered for example from Fig. 3a, the determined cross points 409 and 410 may be seen as final cross points of such an iteration as the target position 411 is visible from point 409 and also from point 410. Consequently, the vehicle, which is depicted by the triangle 310, may take the path via points 344c, 406, 407 and 410 to target position 411. Alternatively, also the path from the vehicle position 402 via points 345, 346 and 409 to the target position 411 is possible. Alternatively, the path from the vehicle position 310 via points 345, 346, 416 and 410 to the target position 411 is a possible path. Also other paths can be calculated by the presented method.

For the herein presented embodiment and every other embodiment of the present invention the following should be noted. Many other paths, which are defined by a sequence of cross points that have been determined by the method of the present invention, can also be calculated, stored and/or used. Further, any path may additionally be evaluated by means of one, two or even more cost functions to decide, determine and/or signal to a user, which path should be ultimately selected for the movement of the vehicle. Different preferences of e.g. the user or the driver, like for example monetary costs, energy efficiency, pollution reduction, and/or minimal traffic, may be taken into account by means of the application of such a cost function or a combination of such cost functions. In case several different cost functions are applied, respective weights may be chosen by the user to weigh the influence or impact of each individual cost function on the overall result. Moreover, those paths may be stored and may be only identified as a sequence of waypoints of the vehicle from the position of the vehicle to the position of the target.

According to another exemplary embodiment of the invention, the method further comprises the step determining at least a first point of a second extreme of a second geometric representation of a second obstacle comprised by the map data, wherein the second extreme is visible from the first cross point. Moreover, the step of identifying a second connecting element starting at the first point of the second extreme and ending at a border of the map or at a border of a geometric representation of another obstacle, e.g. an adjacent obstacle, is comprised. Further, defining at least a second cross point located on the second connecting element and determining whether the target position is visible from the second cross point is comprised. As another step, the method comprises the step of identifying a sequence of waypoints comprising the first cross point and the second cross point as a path for the vehicle from the position of the vehicle to the position of the target in case the target position is visible from the second cross point.

In other words, the second iteration of the previously described method is presented by means of which steps are carried out based on the first cross point as a starting point for carrying out the method.

According to yet another exemplary embodiment of the present invention, the current status of the vehicle comprising at least the current position of the vehicle, the position of the obstacle or of the geometric representation of the obstacle, and/or the target position are updated after the step of identifying the sequence of waypoints as a first path.

This embodiment ensures that for a second iteration and for further calculations of the results of the first iteration, the actual and current status of the vehicle comprising at least the current position, of the obstacle and/or of the target are used. This may enhance the reliability, accuracy and actuality of the result of the calculation. In particular, a calculation of a safe path for use for the vehicle is presented. The skilled person is aware of different possibilities to update the current status of the vehicle comprising at least the current position, the position of the obstacle or of the geometric representation of the obstacle, and/or of the target position

According to another exemplary embodiment of the invention, the method further comprises the step of comparing the first path with a second path by applying a cost function.

The second path may have also been calculated according to the present invention. However, the second path may also be provided by another calculation method and may also be received from an external location like for example from an external server. The cost function may apply different weights and/or different priorities according to which the first or the second path may be preferred by the vehicle. The result of the comparison may be provided to a user such that a user may choose based on the result of the comparison between the first and the second path. Subsequently, if desired, either the first or the second path may be sent to a maneuver execution unit comprised by the vehicle such that the vehicle is moved along the chosen path. Also a sum or a superposition of cost functions with different weights, which can be set by the user can be comprised by this embodiment and also by other embodiments.

According to another exemplary embodiment of the invention, the method further comprises the step of sending data to an execution unit of the vehicle. Therein, the data comprises at least one element chosen from the group comprising the position of a cross point, a velocity towards a cross point, an acceleration in order to get to a cross point, the first path and any combination thereof.

In particular, the results of the method presented herein may be provided to the maneuver execution unit. In particular, said execution unit may be configured to cause maneuvers of the vehicle such that the vehicle moves along the desired path which has been identified as a sequence of waypoints from the position of the vehicle to the target position. As described before this may facilitate a real autonomous vehicle with an autarkic and real time path calculation ability.

According to another exemplary embodiment of the invention, the method is carried out by the vehicle and is carried out in real time.

In the context of this application, the term "real-time" may denote that the program may guarantee a response within a given time-limit. The response within the time-limit may be guaranteed in any situation. Said time-limit may typically range from milliseconds to one second, two seconds or several seconds. Furthermore, the time-limit may be different for different calculation tasks, even for the same vehicle.

According to another exemplary embodiment of the invention, the map is a polygon map and the geometric representation of the obstacle is a polygon.

The map may be embodied as a pure polygon map such that each obstacle presented therein is provided as a polygon. However, also a combination of polygons and circles and/or ellipses and/or other forms and geometric representations may be used. Also single points or crosses may be used to indicate that within the map, a specific object like an obstacle, the vehicle or the target position is located. As has been described before, it is not necessary that the map is illustrated during calculation of the herein defined method. However, optionally, a concurrent illustration is possible according to the present invention. An exemplary embodiment of the polygon-based map is shown with respect to Fig. 3 a and will be explained in detail hereinafter.

According to another exemplary embodiment of the invention, the point corresponding to the first extreme is located at a corner of the polygon, wherein the corner has an angle and wherein the identified first connecting element is a bisecting line that bisects the angle of the corner of the polygon.

In other words, a specific selection rule for identifying the first connecting element, and also of course for subsequent second, third and even more connecting elements is presented. As will be explained with respect to the embodiment depicted in Fig. 3a, a bisecting line provides for a clear and distinct mathematical teaching for the skilled person. These bisecting lines start at the point of the extreme and end either at the border of a map or at a border of an obstacle, e.g. an adjacent obstacle. Moreover, selection rules for the cross points, which are located on said connecting elements will be presented hereinafter.

According to another exemplary embodiment of the invention, a vehicle which is configured for calculating a path is presented. The vehicle comprises a calculation unit. The calculation unit is configured for receiving map data comprising a current status of the vehicle comprising at least the current position of the vehicle, at least a first geometric representation of an obstacle, and a target position. The calculation unit of said vehicle is further configured to determine at least a first point which corresponds to a first extreme of the first geometric representation, wherein the first extreme is visible from the perspective of the vehicle position and is also configured to identify a first connecting element starting at the first point and ending at a border of the map or at a border of a geometric representation of an another obstacle. The calculation unit is also configured to define at least a first cross point located on the first connecting element and to determine whether the target position is visible from the perspective of the first cross point. The calculation is further configured to identify a sequence of waypoints as a first path for the vehicle from the position of the vehicle to the target position in case the target position is visible from the first cross point, wherein the sequence of waypoints comprises the first cross point.

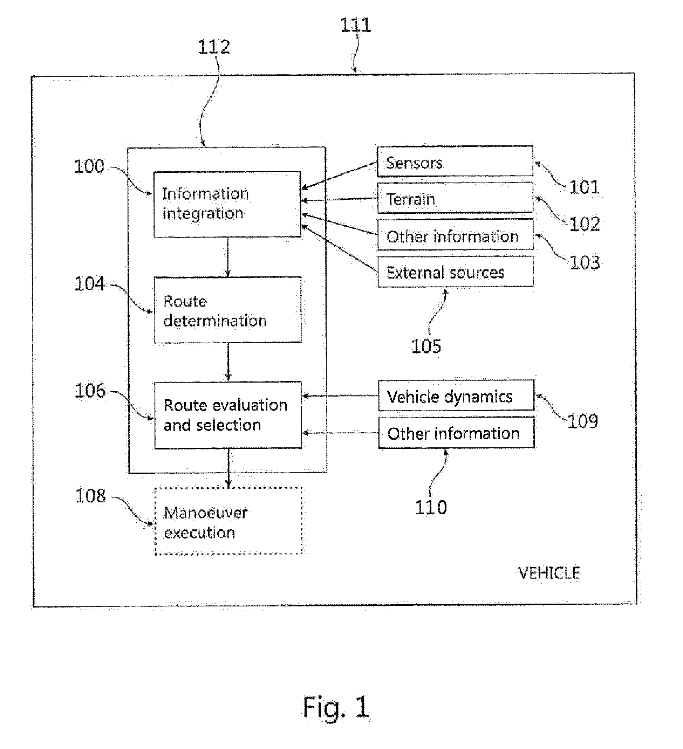

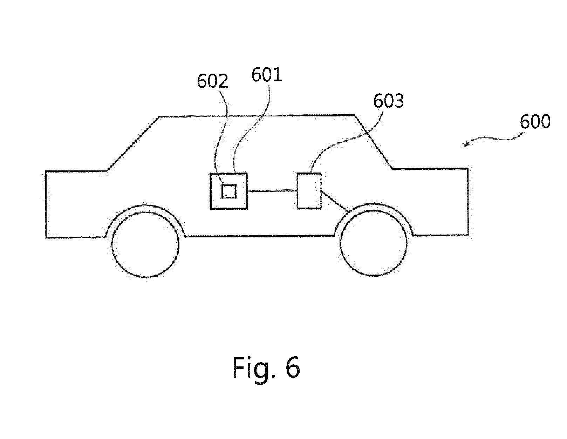

Such a vehicle is exemplarily depicted in Fig. 6. Moreover an exemplary combination of features and functions which are comprised in another exemplary embodiment of such a vehicle is depicted and explained in the context of Fig. 1. Due to the configuration of the calculation unit, which facilitates an extreme based, self-sustained and autonomous calculation of the path for the vehicle even during situations where surrounding obstacles of the vehicle are moving, the vehicle is facilitated to autonomously calculate the optimal path to the target.

According to another exemplary embodiment of the invention, a program element for calculating a path for use in a vehicle is presented, which program element, when being executed by a processor, is adapted to carry out the steps of receiving map data comprising a current status of the vehicle comprising at least the current position of the vehicle, at least a first geometric representation of an obstacle, and a target position; determining at least a first point which corresponds to a first extreme of the first geometric representation, wherein the first extreme is visible from the perspective of the vehicle position; identifying a first connecting element starting at the first point and ending at a border of the map or at a border of a geometric representation of an another obstacle; defining at least a first cross point located on the first connecting element; determining whether the target position is visible from the perspective of the first cross point; and the step of identifying a sequence of waypoints as a first path for the vehicle from the position of the vehicle to the target position in case the target position is visible from the first cross point, wherein the sequence of waypoints comprises the first cross point.

The computer program element may be part of a computer program, but it can also be an entire program by itself. For example the computer program element may be used to update an already existing computer program to get to the present invention.

According to another exemplary embodiment of the invention, a computer-readable medium, in which a computer program for calculating a path for use in a vehicle is stored is presented, which, when being executed by a processor, is adapted to carry out the steps of receiving map data comprising a current status of the vehicle comprising at least the current position of the vehicle, at least a first geometric representation of an obstacle, and a target position; determining at least a first point which corresponds to a first extreme of the first geometric representation, wherein the first extreme is visible from the perspective of the vehicle position; identifying a first connecting element starting at the first point and ending at a border of the map or at a border of a geometric representation of an another obstacle; defining at least a first cross point located on the first connecting element; determining whether the target position is visible from the perspective of the first cross point; and the step of identifying a sequence of waypoints as a first path for the vehicle from the position of the vehicle to the target position in case the target position is visible from the first cross point, wherein the sequence of waypoints comprises the first cross point.

The computer readable medium may be seen as a storage medium, such as for example, a USB stick, a CD, a DVD, a data storage device, a hard disk, or any other medium on which a program element as described above can be stored.

It may be seen as a gist of the present invention to provide, in general, a navigation system and, more particularly, to provide for an efficient global path planning method able to generate obstacle-free trajectories in real time.

These and other features of the invention will become apparent from and elucidated with reference to the embodiments described hereinafter.

### BRIEF DESCRIPTION OF THE DRAWINGS

In principle, identical parts are provided with the same reference symbols in the figures.
Fig.1 schematically shows a vehicle configured for calculating a path according to an exemplary embodiment of the invention.
Fig. 2 schematically shows a part of a method of calculating a path for use in a vehicle using polygon representation according to an exemplary embodiment of the invention.
Fig. 2b schematically shows a part of a method of calculating a path for use in a vehicle using circles and ellipses according to an exemplary embodiment of the invention.
Fig. 3 a schematically shows a method of calculating a path for use in a vehicle according to a polygon-based exemplary embodiment of the present invention.
Fig. 3b schematically shows a method of calculating a path for use in a vehicle based on circles and ellipses according to an exemplary embodiment of the invention.
Fig. 4 shows a flow diagram of a method of calculating a path for use in a vehicle according to an exemplary embodiment of the invention.
Fig. 5 schematically shows a flow diagram of a method of calculating a path for use in a vehicle according to another exemplary embodiment of the invention.
Fig. 6 schematically shows a vehicle configured for calculating a path according to an exemplary embodiment of the invention.

Exemplary embodiments of the invention will be described in the following drawings.

### DETAILED DESCRIPTION OF EMBODIMENTS

In the following, different aspects of the vehicle, the method for calculating a path for use in said vehicle and of the corresponding computer program element are described in the context of exemplary embodiments. As has been explained above, the method underlying the embodiments of Figs. 1 to 3b do not necessarily entail a graphical representation of method steps carried out as shown for example in Fig. 3a. However, if desired, geometric representation may be generated for the user.

In the following exemplary embodiments of the invention, connecting elements are depicted as lines. Thus, in the following description, connecting elements will be called "lines". Of course, the skilled person can also use other geometric representations as connecting elements. For example, the connecting element may be a polygon or an area.

Moreover, also the current position of the vehicle will be used in the following as an exemplary embodiment of the status of the vehicle in order to describe different aspects of the present invention. However, also other embodiments of the feature status of the vehicle could be used in the same way, also in combination. For example, the current status of the vehicle may be selected from the group comprising a velocity of the vehicle, an acceleration of the vehicle, an orientation of the vehicle, a vertical position of the vehicle, and any combination thereof.

Fig. 1 schematically depicts a vehicle 111 which is configured for calculating a path. Therefore, vehicle 111 is configured to carry out the calculation method presented herein according to the present invention. Vehicle 111 comprises a calculation unit 112 which is configured to receive map data comprising a current position of the vehicle, at least a first geometric representation of an obstacle and a target position. Regarding the map data, additional and further detailed explanations will be given in the context of the description of Figs. 2a and 2b. Calculation unit 112 is further configured for determining at least a first point which corresponds to a first extreme of the first geometric representation, wherein the first extreme is determined such that the position of the extreme, i.e. the extreme, is visible from the vehicle position. Moreover, calculation unit 112 is configured for identifying a first line starting at the first point and ending at a border of the map or at a border of a geometric representation of another obstacle. Additionally, calculation unit 112 is configured for defining at least a first cross point located on the first line and for determining whether the target position is visible from the perspective of the first cross point. For carrying out the calculation method, the calculation unit 112 is adapted and/or configured for identifying a sequence of waypoints as a first path for the vehicle from the position of the vehicle to the position of the target in case the target position is visible from the first cross point. Therein, the sequence of waypoints comprises the first cross point.

In detail, calculation 112 of Fig.1 may be embodied such that it carries out the depicted information integration function 100, the route determination function 104 as well as the route evaluation and selection function 106. Also, a maneuver execution unit 108 is depicted in the vehicle of Fig.1 which is not embodied as a part of the calculation unit, but as a separate physical component of vehicle 111. It may also be integrated in the calculation unit 112. Functions 100, 104 and 106 may also be embodied as physical components comprised by the calculation unit 112 but may also be embodied as software components like computer program elements which carry out the respective calculation and/or the respective function. Details about said functions will be provided in the following.

In this exemplary embodiment shown in Fig. 1, the information integration function 100 facilitates receiving map data which map data comprises the current position of the vehicle, a position of a first obstacle which surrounds the vehicle and the target position. The target position may be given by the driver or user but may also be given by an external system like a server, a sensor or an external control unit. As can be gathered from Fig. 1, the calculation unit 112 is able to take into account several different data and/or information from different sensors 101, information about the terrain 102, other kinds of information 103 and information received from external sources 105. Therefore, the embodiment of Fig. 1 facilitates a calculation of a path for use in a vehicle based on different information which allows for a real time reaction or response of the calculation unit regarding accurate real time calculation of the path. Therefore, Fig. 1 may be seen as a schematic block diagram representing an exemplary overall architecture of the path calculation according to this exemplary embodiment of the invention. Function 100 integrates information relevant for the path planning, i.e. the path calculation, into a complete map. This map may include information about what is detected by sensors 101, information about the surrounding terrain 102, other kinds of information 103 and information received from external sources 105. A network interface may thus be comprised by vehicle 111 as well. After the information is integrated into the map, this map may be passed to function 104, which may use this map to determine all the possible routes for the vehicle 111 as has been described before and as will be illustrated in the context of examples depicted in Figs. 2a to 6. Moreover, each possible route or path is represented as a sequence of waypoints from the vehicle position to the target position, where each waypoint has a free line of-sight to the previous and next waypoint, i.e. cross point. Thus, no obstacles are obstructing the lines connecting the waypoints. This will become apparent from and elucidated with exemplary embodiments of Fig. 3 a and 3b. In the embodiment of Fig. 1 the route determination function 104 determines all possible sequence of waypoints and it may be configured to consider only routes on which the visibility between two subsequent waypoints is not harmed by an obstacle.

If desired, possible paths can be saved into a memory and can be kept for a subsequent step of the method. For example, a route evaluation and selection function 106 may be applied to evaluate or assess the previously determined paths by using one or a plurality of cost functions. In such an embodiment, in which the determined paths are evaluated, function 106 performs the evaluation of the paths and selects the path to be used by the vehicle 111. The evaluation may take into account weights of predefined cost functions for each of the possible path. For example, a cost function could provide the time necessary to perform the path. A cost function may also refer to the vehicle dynamics, which may for example be received from unit 109. Function 106 may also consider information about the cost weight and/or priority which may be received from unit 110 which may include stored values and which may also include values received from an external system via e.g. a network. Once a path is selected, it may be sent to the maneuver execution unit 108 which causes and ensures that vehicle 111 moves along the selected path. Different measures for ensuring the selected path may be provided according to the present invention. However, as has been described above, maneuver execution unit 108 may not be seen as an essential part for the calculation method according to the present invention.

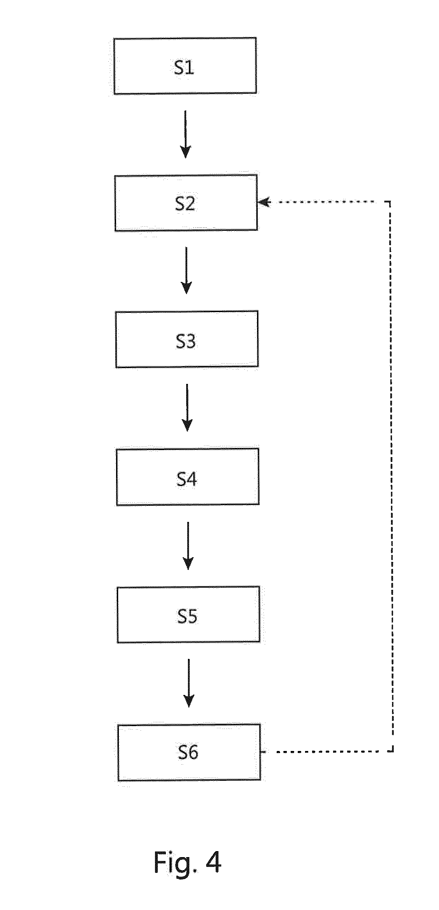

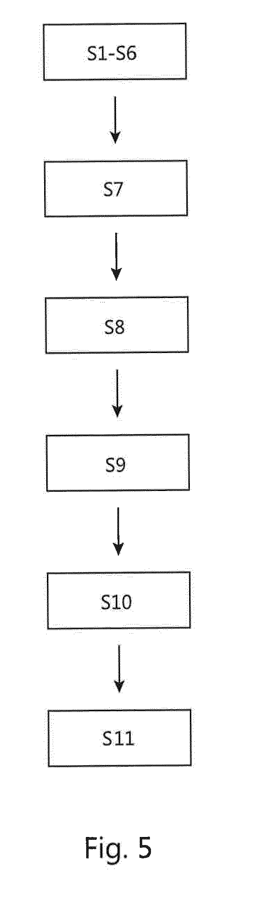

In the following, two exemplary embodiments regarding the geometric representation of obstacles will be described for Figs. 2a and 2b. In particular, Figs. 2a and 2b are schematic block diagrams which both show the step of receiving map data comprising a current position of the vehicle 202, at least a first geometric representation of an obstacle 203, 204 and 205 and a target position 206. The step of receiving the map data is depicted in Figs. 2a and 2b by reference sign 200. It is possible that only the respective geographical position of each obstacle 203, 204 and 205 is received and that the shown information integrations of Figs. 2a and 2b provide for the respective geometric representation of the obstacle. The received data may, however, also comprise data about the geometric representation of the obstacles. The step of receiving map data is also described in the context of Fig. 4 and Fig. 5 which show the respective step with reference sign S1.

As can be gathered from Figs. 2a and 2b, geometric representations of obstacles 203, 204 and 205 can be embodied as polygons, see Fig. 2a, or may also be embodied as circles and/or as ellipses, see Fig. 2b. However, also other geometric representations can be used by the skilled person and of course the use of a combination of polygons and circles/ellipses is part of the present invention. Thus, different formats of the received map data and different geometric representations of the current position of the vehicle, the obstacles and the target position are possible. Figs. 2a and 2b exemplarily show that the received map data may be provided by sensors 207 or by other external systems like databases 210 and that also terrain information or other information can be provided and used by the depicted exemplary embodiments of the present invention. If desired, the creation of the map 201 may be part of the method which is carried out, however, the map may also be provided from e.g. an external system 210. Therefore, if desired, the method and the vehicle according to the present invention may be configured to generate the used map. Information received from sensors 207 may comprise the position and shape of obstacles. Sensors 207 can be of several types and can be chosen by the skilled person as needed. Terrain information 208, like for example terrain elevation, can typically be stored in the vehicle but can also be transmitted and received from an exterior system. Other kinds of information 209, for example target position 206 and/or the target shape, can either be stored in the vehicle or calculated in the vehicle or can be received from external sources, like a control station or a human operator.

As will be described in detail now, the calculation of the path for the vehicle is based on extremes of the geometric representations of the obstacles that currently surround the vehicle and is based on subsequently defined cross points as it is shown in Figs. 3a and b. In particular, Fig. 3a depicts route determination 300 which is based on a polygon map comprising polygons for the depicted obstacles. In combination with the explanations for Fig. 4 it becomes clear that the steps S2 to S6 of the embodiment of Fig. 4 are depicted visually for illustrative purposes in the embodiment of Fig. 3a. Similar to Fig.2a, in Fig. 3 a first geometric representation 309 is shown as well as other geometric representations of obstacles. In 301, the obstacles present in the map are scanned to identify the points which are in line of sight from the vehicle and which are extremes of the respective object when viewed from the vehicle position 310. An obstacle may have more than two extremes, depending on its shape. An obstacle may have two global extremes and zero, one or more local extremes. For example, in Fig. 3 a 301 it is shown that the obstacle 309 comprises two global extremes 305 and 323 and a local extreme 306. The obstacle that is located behind obstacle 309 has two global extremes 308 and 307 and no local extreme.

In the exemplary situation depicted in Fig. 3, point 305 is in line of sight 302 from the vehicle. Thus, point 305 is visible from the vehicle position 310. The same holds true for point 306, which is in line of sight 303 from the vehicle, point 307 which is in line of sight 304 from the vehicle, and point 323, which is in line of sight 325 from the vehicle. Thus, points 305, 306, 307 and 323 are visible from the vehicle position. If desired, these points, i.e. the respective geographical coordinates, may be saved in a memory. Clearly, point 308 of the geometric representation of the obstacle is not visible from the vehicle position 310 and is thus discarded. The determined and identified points may be passed to carry out the steps described in the context of representation 330. In other words, 301 shows step of determining several points which respectively correspond to extremes of geometric representations which points are visible from the perspective of the vehicle position. A similar step is described in the context of Fig. 4 with step S2.

In the case that the obstacle is not convex, the geometric representation of the obstacle has two global extremes, and in addition it may also have any number of local extremes. Thus, more than 2 points may be visible from the perspective of the vehicle position. After the points 305, 306, 307 and 323 are determined, a respective line is identified until it crosses the map limit or map border or until it crosses another geometric representation of an obstacle. Thus, three lines respectively starting from the previously determined points 305, 306, 307 and 323 are calculated or identified. According to the embodiment of Fig. 3a, the obstacle-internal angle associated to a respective point is bisected and a line is identified which crosses either the boundary of the map or an edge of another obstacle. At the position of this crossing another point is identified. Thus, the respective line starts at the point of the extreme of the obstacle and ends at either the border of the map or the border of another geometric representation of an obstacle. This creates so-called gates which is exemplarily depicted in Fig. 3a with reference sign 320. Gate 320 extends from extreme point 321 to the point 322 where the bisecting line crosses the border of the map. In general, gates are regions, in the present case lines, but could also be embodied as objects with another dimension depending on the dimension of the map. Gates have to be crossed by the vehicle when travelling in the general direction of the gate. Regarding gate 312, the angle 311 which is associated with point 313 is bisected by line shown with dotted line 312. Bisecting line 312 crosses the map boundary at 314. Thus, a gate is created, which is located or aligned between the two points 313 and 314 which the vehicle needs to cross if it is to choose a path which follows through this side of the obstacle 309. In a similar way, angle 315 is bisected by line 316 and a further gate 316 is created between points 317 and 318, and angle 324 is bisected by line 326 and a further gate 327 is created where the bisecting line 326 crosses the map boundary at 327.

Moreover, 340 depicts the steps of defining at least a first cross point located on the first line and determining whether the target position is visible from the first cross point. In detail, in 340 a plurality of cross points are defined along each of the gates 312, 316, 320 and 326 and the visibility to the target from these cross points is checked. For example, on the identified first line 312, five cross points 344a, 344b, 344c, 344d and 344e are defined and their direct visibility to the target position 411 is evaluated or checked. However, for simplicity and clarity, only cross point 344c and its direct line 347 to the target are depicted. At gate 316, only the middle cross point 345 is shown and at gate 320, only cross point 346 is shown in Fig. 3a. However, if desired, on each identified line, a plurality of cross points may be defined according to different criteria and the visibility from the respective cross point to the target position can be determined by the presented method. Thus, on each gate 312, 316, 320 and 326, a number of cross points may be defined and one or several or all of these may be selected to check the direct visibility to the target position 411.

When defining the cross points 344a to 344e, the velocity of the obstacle 309 may be taken into account although this is not explicitly shown in the figures. Each object may also comprise a velocity vector which is not displayed in the figures. Details about the velocity of obstacles may be contained in the map data. Further, the position of the obstacle 309 is, e.g., a future position of the obstacle 309 to which the obstacle 309 will have moved when the vehicle 310 will have reached one of the cross points 344a to 344e. Nevertheless, the method of the present invention is described in detail herein with respect to static obstacles, which shall not be understood, however, as limiting the present invention in this regard.

As can be gathered from the situation depicted in 340, no direct visibility is present from cross points 344c, 345, 346 and 327. Therefore, each of these cross points now becomes a reference position, i.e. the starting point of the method for a further iteration. Thus, the procedure described in 301 is repeated, but instead of using the vehicle position 310 as a starting point, the respective cross points 344c, 345, 346 and 327 are used respectively. Therefore, the method depicted in Fig. 3a returns from 340 to 301, but the reference or starting position is no longer the vehicle position 310 but each of the position of the cross points along the gates 312, 316, 320 and 326. This iteration is depicted in Fig. 3a by arrow from 340 to 301. If desired, this can be repeated by the presented method until a certain threshold is achieved, e.g. all the sequences with a given maximum size, i.e. a given maximum number of waypoints, have been calculated. The representation shown in 401 is an example how final map might look like. 401 shows the cross points used in the calculation of all possible sequences with a maximum length of four cross points, while using only one cross point per gate. In this case, the possible sequences with maximum four waypoints, which do not include the vehicle position 310 and the target position 411, are as follows:
(344c,406,407,410)
(344c,406,415,410)
(344c,406,327,417)
(344c,407,410)
(344c,407,414,417)
(344c,407,415,410)
(344c,407,406,410)
(344c,413,346,409)
(344c,413,327,417)
(345,346,409)
(345,327,417)
(345,327,346,409)
(345,346,416,410)
(345,327,346,409)
(345,327,417)
(345,412,415,410)
(345,415,410)
(345,327,415,410)
(345,415,407,410)
(345,415,406,410)
(346,409)
(346,416,410)
(346,416,407,410)
(346,416,414,409)
(346,414,407,410)
(346,414,417)
(327,415,410)
(327,415,407,410)
(327,415,406,410)
(327,412,415,410)
(327,412,406,410)
(327,417)
(327,346,409)
(327,346,416,410)
(327,346,414,417)

Therefore, in the example shown with the exemplary embodiment of Fig. 3a, 35 sequences of waypoints for the vehicle from the position of the vehicle to the position of the target are identified by this embodiment of the presented method. A similar way of this step is described in the embodiment of Fig. 4 with reference sign S6. Of course other amounts of maxima may be used without departing from the present invention.

Turning now to Fig. 3b, a schematic block diagram is presented which, compared to Fig. 3a, makes use of another map format. In particular, the calculation method used in Fig. 3b makes use of circles and ellipses instead of polygons and therefore a different way of determining the points which correspond to extremes of the objects is presented. And the corresponding determination and/or identification of the lines representing the gates and defining the cross points is differently to some extent, as will be explained now. In the embodiment shown in Fig. 3b, the points which respectively correspond to an extreme are the tangent points of the ellipse/circle which is visible from the vehicle position 310, or from determined cross points for subsequent steps. In the following, specific explanations for the embodiment of Fig. 3b are given, whereas it is kindly referred to the description of Fig. 3a with respect to the remaining, non-described but similar elements. In the illustration of 330 in Fig. 3b, the angle which is divided is 180° because it is the angle between the two sides of a tangent line to the circle or to the ellipse. The lines which are identified and which start at the first extreme point and end at a border of a map or at a border of a geometric representation of another obstacle, i.e. the gates 312, 316 and 320, are perpendicular to the tangent line. In 401, all the paths with three gates to the target position 411 are shown as well as the sequence in which the objects extremes were determined. The gates were defined from those extremes. Based on said gates, cross points were defined and the process was again carried out until the target position 411 is reached.

It should be noted, that the gate line, for example 312, 316, 320 and 326, may have any direction. However, the user may also define fixed directions for it, for example vertical direction, a horizontal direction, along the tangent line, or a combination thereof. Moreover, the gate lines need not always to be straight lines, in some cases it might be beneficial to use curves or other shapes of the lines. Also the selection of the cross points can be carried out in several ways. For example, one may select the cross point which has at least a given distance to the point of the extreme of the geometric representation of the obstacle. This might guarantee that there is enough space to account for the vehicle dimensions. Moreover, the path calculation may also take place stepwise after the identification or creation of each gate and does not need to take place only at the end of the creation of all gates. Therefore, only an exemplary time sequence of calculation is shown in Figs. 3a and b, however, also other sequences are possible without departing from the present invention.

For both embodiments shown in Figs. 3a and 3b, the following evaluation may be used according to another exemplary embodiment of the invention. The sequence of waypoints which have been identified by the method according to the invention, as for example sequence 344c, 406, 407 and 410 can be evaluated by a cost function. Thus, after all possible sequences have been identified, a sequence evaluation unit calculates the value of all cost functions for each of the identified sequences of cross points. The cost function may include the dynamics of the vehicle, in order to determine which sequences are feasible or not. Moreover, the sequence evaluation may also take place stepwise after the identification or creation of each gate and does not need to take place only at the end of the creation of all gates.

As can be gathered from the following description, the method presented herein can be run in real time or not. When it is run in real time, a map or part of the map can be updated according to the present invention with the latest information and the complete process of determining extremes, determining lines, i.e. gates, determining cross points and selecting the best sequence of cross points may happen in real time. As the vehicle may move, the extremes of obstacles may also move and the map as exemplarily shown in 401 may change accordingly. The present invention facilitates the possibility to take into account such changes of the surrounding during movement of the vehicle. For example, the sensors 207 may provide actual information about the surrounding of the vehicle which can then be implemented into the method of calculating a path according to the present invention. Therefore, the presented method provides for an efficient way of calculating a global path and can be carried out in real time. Thus, the presented method increases the capability and flexibility of autonomous vehicles. Moreover, the presented method requires less resources than current methods while delivering higher performance.

Both embodiments shown in Fig. 3 a and 3b may be seen as an embodiment which carries out the following path calculation. The respective map may comprise a plurality of geometric representations of obstacles and the method comprises the steps of determining a respective point of an extreme of each geometric representations out of the plurality of geometric representations, wherein each extreme is visible from the perspective of the vehicle position. Moreover, identifying a respective line for each determined point, wherein each line starts at the determined point and ends at a border of the map or at a border of another geometric representation is comprised. Further, the step of defining a respective cross point on each line and the step of determining whether the target position is visible from each perspective cross point is carried out. Storing a respective sequence of waypoints comprising one of said cross points as a path for the vehicle from the position of the vehicle to the position of the target in case the target position is visible from the perspective of said cross point is also part of this embodiment.

Fig. 4 schematically shows a flow diagram of a method of calculating a path for use in a vehicle according to an exemplary embodiment of the invention. In step S1, receiving map data is carried out wherein the map data comprise a current position of the vehicle, at least a first geometric representation of a first obstacle and a target position. Different map formats can be used as has been described in the context of Figs. 3a and 3b. The unit carrying out the presented method determines at least a first point which corresponds to a first extreme of the first geometric representation. A determination is carried out such that the first extreme is visible from the perspective of the vehicle position. It can be gathered for example from the representation shown in 301 of Fig. 3b. After step S2, a first line is identified, which starts at the first point and which ends at a border of the map or at a border of another geometric representation of another obstacle. Fig. 4 depicts the step with reference sign S3. Moreover, defining at least a first cross point located on the first line and determining whether the target position is visible from the first cross point is carried out in steps S4 and S5. In step S6, a sequence of waypoints is identified as a first path for the vehicle from the position of the vehicle to the target position in case the target position is visible from the first cross point. The sequence of waypoints thereby comprises the first cross point. In case the target position is visible, the sequence of waypoints can be used by a maneuver execution unit or a control unit to control the movement of the vehicle accordingly. However, also additional evaluations may be carried out for the identified sequence of waypoints by for example a cost function or a plurality of cost functions. As has been described before in detail, steps S2 to S6 may also be repeated in case the target position is not visible from the first cross point. In the latter case, the determination of further points corresponding to extremes of geometric representations and not the vehicle position but the previously defined cross point of the previous iteration is used for steps S2 to S6. The method depicted in Fig. 4 may also be used to calculate in parallel for several objects the extremes, lines, i.e. the gates, cross points as well as the sequence of waypoints.

According to another exemplary embodiment of the invention, Fig. 5 depicts a flow diagram of a method of calculating a path for use in a vehicle. Regarding steps S1 to S6, it is kindly referred to the description of Fig. 4. Moreover, the method steps S7 to S11 are comprised by the embodiment of Fig. 5. The embodiment of Fig. 5 describes a situation in which in step S6 the target position is not yet visible from the first cross point. Consequently, at least a first point of a second extreme of a second geometric representation of a second obstacle comprised by the map data is determined in step S7. The second extreme is visible from the first cross point which has been determined previously. Moreover, a second line is identified which starts at the first cross point of the second extreme and which ends at a border of the map or at a border of a geometric representation of another obstacle, which is shown with step S8. Moreover, in the embodiment of Fig. 5, at least a second cross point located on the second line is defined in step S9 and it is checked whether the target position is visible from the second cross point in step S10. Consequently, a sequence of waypoints is identified which comprises the first cross point and the second cross point as a path for the vehicle from the position of the vehicle to the position of the target in case the target position is visible from the second cross point as depicted in Fig. 5 with step S11. As it has been described with respect to the embodiments of Figs. 3a and 3b, this may end up with a plurality of identified sequences of waypoints which may subsequently be evaluated by several different mathematical functions.

The first geometric representation of the first obstacle and the second geometric representation of the second obstacle may refer to different geometric representations of different obstacles. The first geometric representation of the first obstacle and the second geometric representation of the second obstacle may also refer to the representation of the same obstacle. For example, in Fig. 3 a point 344c could be determined as first cross point. Subsequently, point 406 could be determined as second cross point. Point 406 is determined by drawing a line from an extreme of the geometric representation of the obstacle 309, which was already used for determining point 344c. Thus, in this embodiment the first geometric representation of the first obstacle and the second geometric representation of the second obstacle refer to the representation of the same obstacle.

According to another exemplary embodiment of the invention, Fig. 6 depicts a car 600 which comprises a calculation unit 601 which is configured to carry out the herein presented methods. The calculation unit 601 may comprise a program element 602 which is configured for calculating a path for use in a vehicle. Moreover, maneuver execution unit 603 is depicted which is able to cause the movement of the vehicle 600 according and/or based on the identified sequence of waypoints which is selected by a system, a user or the control unit 601, accordingly.

Other variations to the disclosed embodiments can be understood and effected by those skilled in the art in practising the claimed invention, from the study of the drawings, the disclosure, and the appended claims. In the claims the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. Method of calculating a path for use in a vehicle, the method comprising the steps:
receiving map data comprising a current status of the vehicle comprising at least a current position of the vehicle (310), at least a first geometric representation of a first obstacle (309), and a target position (411) (step S1);
determining at least a first point (305) which corresponds to a first extreme of the first geometric representation, wherein the first extreme is visible from the perspective of the vehicle position (step S2);
identifying a first connecting element (312) starting at the first point and ending at a border of the map or at a border of a geometric representation of another obstacle (step S3);
defining at least a first cross (344c) point located on the first connecting element (step S4);
determining whether the target position is visible from the first cross point (step S5); and
identifying a sequence of waypoints as a first path for the vehicle from the position of the vehicle to the target position in case the target position is visible from the perspective of the first cross point, wherein the sequence of waypoints comprises the first cross point (step S6).

2. Method according to claim 1,
wherein the map data comprises a second geometric representation of a second obstacle, the method further comprising the steps:
repeating steps S2 to S6 starting with the first cross point in case the target position is not visible from the perspective of the first cross point;
wherein the repeated step S2 is carried out such that the first cross point is used instead of the current status of the vehicle;
wherein in the repeated step S2 at least a second point which corresponds to a first extreme of the second geometric representation is determined, and
wherein the second point is visible from the first cross point.

3. Method according to claim 2,
wherein the received map data comprises a plurality of geometric representations,
wherein each geometric representation represents a respective obstacle, and
wherein the steps S2 to S6 are repeated until the target position is visible from a final cross point.

4. Method according to claim 3,
wherein each repetition of the steps S2 to S6 defines an iteration;
wherein the final cross point is the cross point defined in a last iteration; and
wherein the sequence of waypoints comprises the cross points of all iterations.

5. Method according to claim 1, further comprising the steps:
determining at least a first point of a second extreme of a second geometric representation of a second obstacle comprised by the map data, wherein the second extreme is visible from the first cross point (step S7);
indentifying a second connecting element starting at the first point of the second extreme and ending at a border of the map or at a border of a geometric representation of another obstacle (step S8);
defining at least a second cross point located on the second connecting element (step S9);
determining whether the target position is visible from the perspective of the second cross point (step S10); and
identifying a sequence of waypoints comprising the first cross point and the second cross point as a path for the vehicle from the position of the vehicle to the position of the target in case the target position is visible from the second cross point (step S11).

6. Method according to any one of the preceding claims,
wherein the current status of the vehicle, the position of the obstacle, and/or the target position are updated after the step S6.

7. Method according to any one of the preceding claims, further comprising the step of
comparing the first path and a second path by means of a cost function.

8. Method according to any one of the preceding claims, further comprising the step:
sending data to an execution unit of the vehicle, and
wherein the data comprises at least one element chosen from the group comprising the position of a cross point, a velocity towards a cross point, an acceleration in order to get to a cross point, the first path, and any combination thereof.

9. Method according to any one of the preceding claims,
wherein the method is carried out by the vehicle and in real time.

10. Method according to any one of the preceding claims,
wherein the map is a polygon map, and
wherein the geometric representation of the first obstacle is a polygon.

11. Method according to claim 10,
wherein the point corresponding to the first extreme is located at a corner of the polygon,
wherein the corner has an angle; and
wherein the identified first connecting element is a bisecting line which bisects the angle of the corner of the polygon.

12. Vehicle configured for calculating a path, the vehicle comprising:
a calculation unit (112, 601);
wherein the calculation unit is configured for:
- receiving map data comprising a current status of the vehicle comprising at least a current position of the vehicle, at least a first geometric representation of an obstacle, and a target position (step S1);
- determining at least a first point which corresponds to a first extreme of the first geometric representation, wherein the first extreme is visible from the perspective of the vehicle position (step S2);
- identifying a first connecting element starting at the first point and ending at a border of the map or at a border of a geometric representation of an another obstacle (step S3);
- defining at least a first cross point located on the first connecting element (step S4);
- determining whether the target position is visible from the perspective of the first cross point (step S5); and
- identifying a sequence of waypoints as a first path for the vehicle from the position of the vehicle to the target position in case the target position is visible from the first cross point, wherein the sequence of waypoints comprises the first cross point (step S6).

13. A program element for calculating a path for use in a vehicle, which program element, when being executed by a processor, is adapted to carry out:
- receiving map data comprising a current status of the vehicle comprising at least a current position of the vehicle, at least a first geometric representation of an obstacle, and a target position;
- determining at least a first point which corresponds to a first extreme of the first geometric representation, wherein the first extreme is visible from the perspective of the vehicle position;
- identifying a first connecting element starting at the first point and ending at a border of the map or at a border of a geometric representation of an another obstacle;
- defining at least a first cross point located on the first connecting element;
- determining whether the target position is visible from the perspective of the first cross point; and
- identifying a sequence of waypoints as a first path for the vehicle from the position of the vehicle to the target position in case the target position is visible from the first cross point, wherein the sequence of waypoints comprises the first cross point.

14. A computer-readable medium, in which a computer program for calculating a path for use in a vehicle is stored, which, when being executed by a processor, is adapted to carry out:
- receiving map data comprising a current status of the vehicle comprising at least a current position of the vehicle, at least a first geometric representation of an obstacle, and a target position;
- determining at least a first point which corresponds to a first extreme of the first geometric representation, wherein the first extreme is visible from the perspective of the vehicle position;
- identifying a first connecting element starting at the first point and ending at a border of the map or at a border of a geometric representation of an another obstacle;
- defining at least a first cross point located on the first connecting element;
- determining whether the target position is visible from the perspective of the first cross point; and
- identifying a sequence of waypoints as a first path for the vehicle from the position of the vehicle to the target position case the target position is visible from the first cross point, wherein the sequence of waypoints comprises the first cross point.
